# EUROPEAN PATENT SPECIFICATION

(11) **EP 2 286 682 B1**
(45) Date of publication and mention of the grant of the patent: **27.03.2019**
(21) Application number: 10173312.9
(22) Date of filing: 18.08.2010
(51) Int. Cl.: A41D 19/00, A41D 19/015, C08J 7/02

(54) **Gloves**
Handschuhe
Gants

(30) Priority: 19.08.2009 JP 2009189926
(43) Date of publication of application: 23.02.2011
(73) Proprietor: Showa Glove Co., Hyogo 670-0802 (JP)
(72) Inventor: Higuchi, Naohito, Himeji-shi Hyogo 670-0802 (JP)
(74) Representative: Vossius & Partner Patentanwälte Rechtsanwälte mbB

(56) References cited:
- WO-A1-2009/011471
- GB-A- 964 635
- US-A- 3 879 764

## Description

The present invention relates to a glove in which the surface of a glove made of fibers is coated with a porous layer, and more specifically, to a glove which, by controlling the porosity of the porous layer, has excellent abrasion resistance, moisture permeability and flexibility and is superior in the peel strength of the porous layer.

Hitherto, gloves, in which a resin layer or a rubber layer is provided on a part, for example, a palm part, or an entire area of a raw glove (a glove which is a base to be coated with a resin) comprised of a glove made of fibers for the purpose of anti-slip or prevention of accidents, have been known. In recent years, gloves, having a structure in which a resin layer or a rubber layer is porous particularly in order to prevent steamy conditions at the time of wearing the gloves and thereby sweat is released out of the glove, have been widely used.

As gloves of this type, for example, gloves, which are formed by applying a thermoplastic resin foamed mechanically onto a raw glove made of fibers, are disclosed in JP-A Nos. 2006-169676 and 2005-320352.

Further, in the gloves in which a polyurethane resin is used, gloves having the function of efficiently releasing sweat out of the glove (moisture permeability) can be obtained. For example, in JP-A No. 2005-054329, there is disclosed a glove produced by so-called wet processing in which a dimethylformamide (DMF) solution of polyurethane is applied onto the surface of a raw glove and the raw glove is dipped into a water bath to replace the DMF with water and thereby a part from which the DMF has been extracted becomes porous.

Furthermore, in International Publication WO 2008/029703, there is disclosed a glove formed by coating a raw glove with a polyurethane resin, which is resistant to abrasion and has the function of releasing sweat out of the glove by using a moisture-permeable polyurethane resin.

WO 2009/011471 discloses aqueous polyurethane coated gloves and a method for manufacturing the same, in which polyurethane is coagulated without being dissolved in water when the gloves are coated with aqueous polyurethane through a wet process, and a plurality of micro-pores are formed in the gloves to enhance the air permeability.

However, in gloves in which a thermoplastic resin is mechanically foamed like those described in JP-A Nos. 2006-169676 and 2005-320352, there is a problem that the size of the pores of the foam is large and therefore the resin is exfoliated due to a frictional force applied to the glove at the time of working. Moreover, there are problems that an amount of the resin is large and therefore the function of releasing sweat is low and a thickness of the glove is large.

Further, in the glove described in JP-A No. 2005-054329, there are problems that the glove is vulnerable to abrasion because of a reduced amount of the resin provided on the surface of the glove. Moreover, because of insufficient peel strength, the resin adheres to a pressure-sensitive adhesive tape or a seal in works including the handling of the pressure-sensitive adhesive tape or the seal, for example packaging works, and the resin layer is peeled off to migrate to the pressure-sensitive adhesive tape or the seal. Further, a part of the coating layer of the glove may sometimes migrate to precision products or the like to cause problems.

Further, in the glove described in International Publication WO 2008/029703, since a porous polyurethane resin is coated with nonporous polyurethane, it is inevitable that the moisture permeability is poor even if a moisture-permeable resin is used.

In view of the above problems, it is an object of the present invention to provide a glove which is formed by providing a porous coating layer on the surface of a raw glove comprised of a glove made of fibers, and which, by controlling a porous structure of the porous coating layer, has excellent abrasion resistance, moisture permeability and flexibility and is superior in the peel strength of the porous coating layer and in the resistance to peeling/migration to pressure-sensitive adhesive tapes or the like.

The glove of the present invention has excellent abrasion resistance, moisture permeability and flexibility, and is superior in peel strength of a porous coating layer and in resistance to peeling/migration to pressure-sensitive adhesive tapes or the like by forming a specific porous structure in which in a specific electron-microscopic field of the porous coating layer provided on the surface of a glove made of a fiber, a plurality of pores having an area of 0.785 to 78.5 µm² are present and an average of the smallest thickness of each resin layer existing between the pores for the respective pores is 0.9 to 178 µm.

Further, a void ratio of the total area of pores having the area of not less than 0.785 µm² to an area of the electron-microscopic field is preferably 0.3 to 75%, and thereby the above-mentioned effects are achieved more effectively.

Further, a number of pores having the area of 0.785 to 78.5 µm² in the electron-microscopic field is preferably 2 to 35, and thereby the above-mentioned effects are achieved more effectively.

Further, a thickness of the porous coating layer is preferably 7.5 to 150 µm.

The glove of the present invention can be obtained by dipping a glove made of a fiber put on a hand mold into a polyurethane resin solution, then pulling up the hand mold to remove the excessive resin solution, and dipping the hand mold into water or warm water containing an organic solvent with a solubility parameter of 6.0 to 10.5 in an amount of 0.01 to 20% by weight to cause the polyurethane resin to gel in a porous state.

Further, the glove of the present invention can be obtained by dipping a glove made of a fiber put on a hand mold into a polyurethane resin solution containing an organic solvent with a solubility parameter of 6.0 to 10.5 in an amount of 1 to 200 parts by weight based on 100 parts by weight of the resin content, then pulling up the hand mold to remove the excessive resin solution, and dipping the hand mold into water or warm water to cause the polyurethane resin to gel in a porous state.

The organic solvent is preferably methyl ethyl ketone or ethylbenzene.

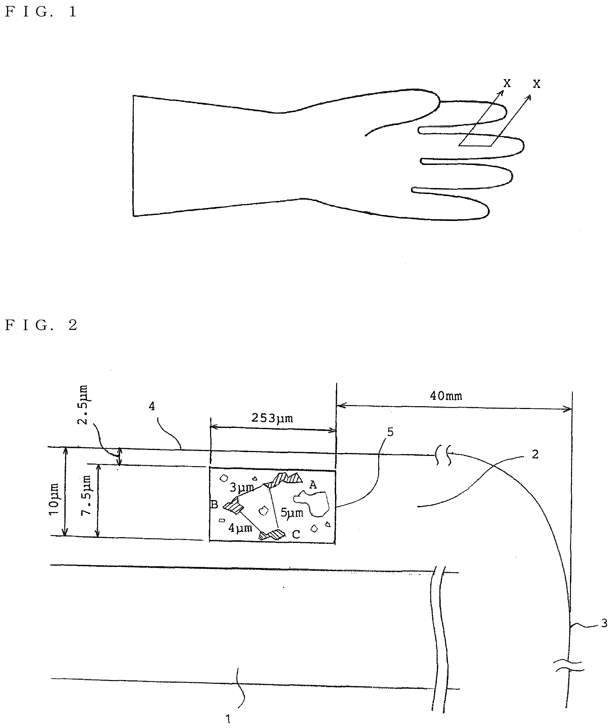

The invention is described in detail in connection with the drawings in which
Fig. 1 is a schematic view of a glove of the present invention;
Fig. 2 is a schematic conceptual view taken on line X-X of Fig. 1;

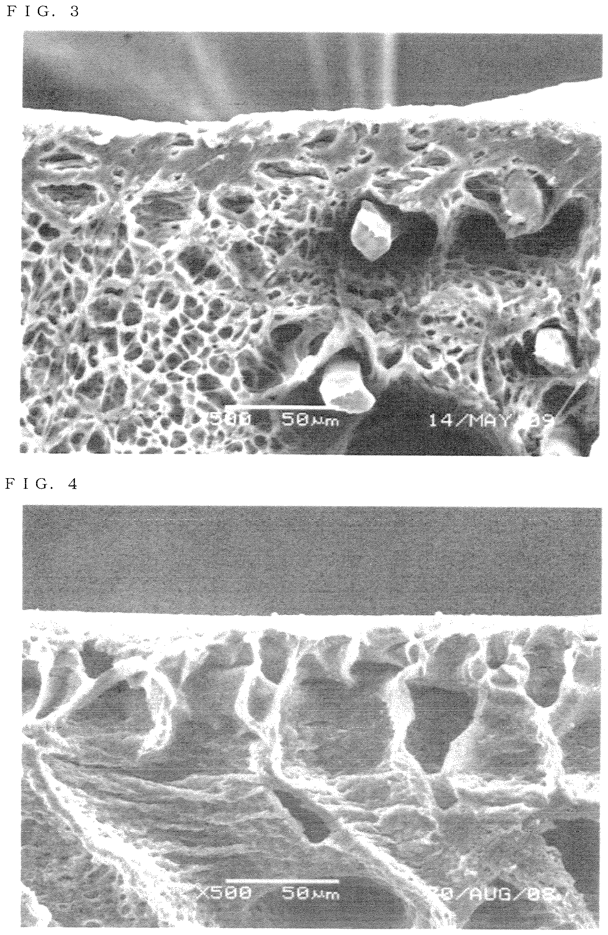

Fig. 3 is an electron micrograph (a magnification of 500 times) showing a cross-section of a porous coating layer in the glove obtained in Example 5, in which the upper section of the micrograph represents an outer surface side of the glove and a thickness of the resin layer forming a pore on an inner side is small and the resin layer having a relatively large thickness forms a pore on the outer surface side;
Fig. 4 is an electron micrograph (a magnification of 500 times) showing a cross-section of a porous coating layer in the glove obtained in Comparative Example 1, in which the upper section of the micrograph represents an outer surface side of the glove and both thicknesses of the resin layers forming a pore on an inner side and on the outer surface side are small; and

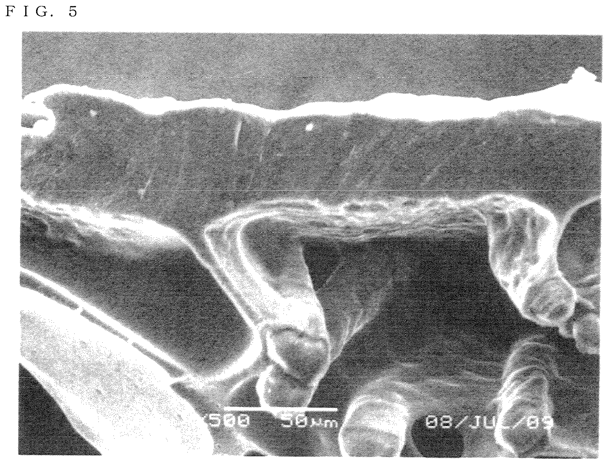

Fig. 5 is an electron micrograph (a magnification of 500 times) showing a cross-section of a porous coating layer in the glove obtained in Comparative Example 8, in which the upper section of the micrograph represents an outer surface side of the glove and a nonporous resin layer is formed on the outer surface side.

The glove of the present invention has a feature that a porous coating layer is provided on the surface of a glove made of a fiber, and a plurality of pores having the area of 0.785 to 78.5 µm² are present and an average of the smallest thickness of each resin layer existing between the pores for the respective pores is 0.9 to 178 µm, in an electron-microscopic field at the time when a finger pad central portion, 40 mm away from a finger tip toward a finger pad, of a finger portion in the porous coating layer is cut off and a cross-section of 253 µm in length directed from the finger tip toward the finger pad and 2.5 to 10 µm in depth perpendicularly from a surface of the porous coating layer is observed at a magnification of 500 times with an electron microscope.

The present invention will be described based on Fig. 1 which is a schematic view of a glove of the present invention and Fig. 2 which is an enlarged schematic conceptual view taken on line X-X of Fig. 1.

The glove of the present invention has a feature that a porous coating layer 2 is provided on the surface of a glove 1 made of a fiber (raw glove), and a plurality of pores having the area of 0.785 to 78.5 µm² are present and an average of the smallest thickness of each resin layer existing between the pores is 0.9 to 178 µm, in an electron-microscopic field at the time when a finger pad central portion, 40 mm away from a finger tip 3 toward a finger pad 4, of a finger portion in the porous coating layer 2 is cut off and a cross-section of 253 µm in length directed from the finger tip 3 toward the finger pad 4 and 2.5 to 10 µm in depth perpendicularly from a surface of the porous coating layer is observed at a magnification of 500 times with an electron microscope.

In the present invention, as the finger to be observed with an electron microscope, a middle finger is appropriate in point of being the most appropriately representative of five fingers. However, while the sampling and the measurement of the coating characteristics can be performed on the coating applied to one finger, it will be understood that the structure of the coating is usually the same on all portions of the glove to which the coating is applied.

In the present invention, as the electron microscope, JSM-6060LA manufactured by JEOL Ltd. was used.

The area of the pore was determined by outlining the pore on a photograph using Adobe Illustrator CS4 Ver. 14.00, writing the resulting figure of the pore in the data form of dwg, and calculating the area of the figure using CADSUPER FX II Vol. 3.13 (manufactured by ANDOR Co., Ltd.).

The number of pores was determined by calculating the pores having the area of 0.785 to 78.5 µm² in an electron micrograph in accordance with the above-mentioned method and counting the number of the pores. In addition, as for pores only a part of which exists in the electron-microscopic field, any pore of which the area within the electron-microscopic field is in the range of 0.785 to 78.5 µm² was counted.

In the present invention, when the area of a pore is less than 0.785 µm², not only the measurement is difficult, but also flexibility and moisture permeability of the glove are deteriorated, and on the other hand when the area of a pore is more than 78.5 µm², abrasion resistance is deteriorated. Further, when an average of a thickness of a portion, at which the thickness of each resin layer existing between the pores is the smallest for the respective pores having these areas, is less than 0.9 µm, abrasion resistance of the glove is deteriorated, and on the other hand when the average of a thickness is more than 178 µm, moisture permeability and flexibility of the glove are deteriorated.

In addition, with respect to the average of a thickness of a portion, at which the thickness of each resin layer existing between pores is the smallest for the respective pores, if assuming the case where as shown in Fig. 2, three pores A, B and C having an area of 0.785 to 78.5 µm² are present in the electron-microscopic field, and the smallest thickness of a resin layer between the pore A and the pore B is 3 µm, the smallest thickness of a resin layer between the pore B and the pore C is 4 µm and the smallest thickness of a resin layer between the pore C and the pore A is 5 µm, the thickness of a portion, at which the thickness of each resin layer existing between pores is the smallest is 3 µm for the pore A, the thickness is 3 µm for the pore B and the thickness is 4 µm for the pore C, and an average of these thicknesses is 3.3 µm from (3 + 3 + 4)/3. Thus, it will be understood that the term "smallest thickness" as it is used in this context can also be referred to as the shortest distance observed in the electron microscopic field between two pores.

Meanwhile, in Fig. 2, pores with oblique lines are inside an area of 0.785 to 78.5 µm² while pores without oblique lines are outside the above area.

Further, the void ratio, which is a ratio of the total area (µm²) of pores having the area of not less than 0.785 µm² to the above area (1897.5 µm²) of the microscopic field, is preferably 0.3 to 75%, more preferably 0.3 to 50%, and furthermore preferably 0.5 to 35%. When the void ratio is less than 0.3%, the moisture permeability and flexibility of the glove tend to be deteriorated, and on the other hand when the void ratio is more than 75%, the abrasion resistance of the glove tends to be deteriorated.

Furthermore, the number of the pores having an area of 0.785 to 78.5 *µ*m² in the microscopic field is preferably 2 to 35, more preferably 3 to 30, and furthermore preferably 3 to 25. When the number of the pores is less than 2, the moisture permeability and flexibility tend to be deteriorated, and on the other hand when the number of the pores is more than 35, the abrasion resistance of the glove tends to be deteriorated.

Furthermore, the thickness of the porous coating layer controlled to have the structure of the present invention is preferably 7.5 to 150 µm, and when the thickness is in this range, it is easy to obtain a glove which is superior not only in abrasion resistance and peel strength, but also in moisture permeability and flexibility.

The glove made of fibers used in the present invention is a raw glove, namely, a glove which is a base to be coated with a resin (hereinafter, sometimes referred to as raw glove), and it is comprised of filament yarns (filaments) or spun yarns of synthetic fibers, natural fibers, or regenerated fibers. Specifically, these fibers are used as sewed raw gloves made of clothes such as fabrics and knits or seamless knitted raw gloves. Since gloves having stretchability and soft hand touch are suitable for good workability, sewed raw gloves made of a knitted cloth or seamless knitted raw gloves are preferably used.

Examples of the natural fibers include cotton, wool, silk, and hemp. Further, examples of the synthetic fibers or the regenerated fibers include polyester fibers, polyamide fibers, acrylic fibers, polyvinyl chloride fibers, rayon fibers, polynosic fibers, cuprammonium fibers, acetate fibers, triacetate fibers, promix fibers, vinylon fibers, vinylidene fibers, polypropylene fibers, polybenzoate fibers, polychlal fibers, polyethylene fibers, polyaramide fibers, and polyurethane fibers. Further, rubber yarns made of polyurethane rubber or natural rubber may be used.

The fibers may be used singly or in combination of two or more species according to need. For example, in the applications of protection against a cut wound accident, high strength fibers are preferably used and raw gloves made of high strength polyethylene fibers, p-phenylene terephthalamide fibers, high strength polyarylate fibers of liquid crystal polymer fibers or the like are preferably used. Further, for the prevention of dust formation in the applications of clean room, it is preferred to use raw gloves made of filament yarns, such as polyester fibers, polyamide fibers, rayon fibers, polynosic fibers, polyethylene fibers and polyaramide fibers, or crimped yarns thereof.

A thickness of the yarn to be used for the raw glove can be selected according to use, and it is preferably 40 to 1000 dtex. When the thickness is more than 1000 dtex, the raw glove becomes hard, and hand touch, touch feeling and softness tend to be deteriorated.

The knit density in the case of a seamless knitted raw glove is preferably 10 gauge (hereinafter, abbreviated to "G") or more from the viewpoint of hand touch, touch feeling and softness of the glove, and more preferably 13 G or more. When the knit density is less than 10 G, since the thickness of the yarn to be used increases, the raw glove becomes hard, and hand touch, touch feeling and softness tend to be deteriorated.

In general, in the case of a seamless knitted raw glove (for example, using N-SFG manufactured by SHIMA SEIKI MFG., Ltd.), a face stitch comes to the outer surface side of the glove in a knitted state, and the porous coating layer may be formed on the face stitch, or the porous coating layer may be formed on a back stitch after turning the glove inside out. When the glove is turned inside out and used, it is preferred since the purl stitch being a lateral stitch appears at the outer surface of the glove and these bumps and dips play a role of anti-slip. In addition, the definitions of the knit stitch and the purl stitch are based on "Encyclopedia of Fibers, Tatsuya Motomiya, March 25, 2002, published by Maruzen Co., Ltd.".

As a material of the porous coating layer provided on the surface of the raw glove, polyurethane resin is used. Examples of other non-claimed materials include polyvinyl chloride, polyvinyl alcohol, polyethylene, polypropylene, ethylene-propylene block copolymer, natural rubber, nitrile butadiene rubber, styrene-butadiene rubber, chlorosulfonated polyethylene rubber, chloroprene rubber, isoprene rubber, and a modified product thereof.

These resins and rubbers may be used alone or in combination of two or more. Furthermore, in order to improve properties of the resins and rubbers, additives commonly used, such as a vulcanizing agent, a vulcanization accelerator, a crosslinking agent, a stabilizer, an antioxidant, a filler and a pigment, may be used.

Among these resins and rubbers, a polyurethane resin is used because the polyurethane resin can form a porous coating layer by wet processing and can provide a flexible porous coating layer having high moisture permeability.

As commercially available polyurethane resin solutions, for example, CRISVON (registered trademark) MP-812, CRISVON 8006HVLD and CRISVON MP-802 (produced by DIC Corporation), SANPRENE (registered trademark) LQ-X37L, SANPRENE LQ-3358 and SANPRENE LQ-3313A (produced by Sanyo Chemical Industries, Ltd.), RESAMINE (registered trademark) CU-4340, RESAMINE CU-4310HV and RESAMINE CU-4210 (produced by Dainichiseika Color & Chemicals Mfg. Co., Ltd.) can be used.

These polyurethane resin solutions may be diluted with a known solvent such as dimethylformamide, dimethylacetoamide, dimethylsulfoxide, N-methylpyrrolidone, which is a hydrophilic solvent compatible with both a polyurethane resin and water. These may be used singly or in combination of two or more.

The polyurethane resin solution can include a surfactant, a pigment such as titanium oxide, and/or a crosslinking agent such as isocyanate or oxazoline as an additive substance.

The pigment such as titanium oxide is used for the purpose of coloring the glove or exhibiting hiding properties and the amount of the pigment added is preferably 20 parts by weight or less, and more preferably 10 parts by weight or less in terms of the solid content of the pigment based on 100 parts by weight of the solid content of the polyurethane resin. When the amount of the pigment added is more than 20 parts by weight, a pigment may be precipitated or physical properties of the resin layer may be deteriorated in a mixture system. Further, the glove tends to become hard and decrease in feeling.

The crosslinking agent is appropriately used according to the polyurethane resin to be used, and the amount of the crosslinking agent added is preferably 10 parts by weight or less, and more preferably 5 parts by weight or less in terms of the solid content of the crosslinking agent based on 100 parts by weight of the solid content of the polyurethane resin. When the amount of the crosslinking agent added is more than 10 parts by weight, a further cross-linking effect is not expected and further improvement in physical properties is not expected in most cases, and to the contrary, the feeling of the gloves tend to be significantly deteriorated due to curing of the resin.

Examples of the surfactant include silicon-based surfactants and nonsilicon-based surfactants. As commercially available surfactants, for example, ASSISTOR SD-11, ASSISTOR SD-7 (produced by DIC Corporation), RESAMINE Cut-30 (produced by Dainichiseika Color & Chemicals Mfg. Co., Ltd.), and LUCKSKIN (registered trademark) JA-40, LUCKSKIN JA-70 and LUCKSKIN JA-110 (produced by SEIKOH CHEMICALS CO., LTD.) can be used. These may be used singly or in combination of two or more.

The surfactant can be used for controlling a rate of replacing the hydrophilic solvent in the polyurethane resin solution with water during wet processing. If a hydrophilic surfactant is mixed, the extraction of the hydrophilic solvent in the polyurethane resin into water is more quickly performed to increase a replacement rate. On the contrary, if a hydrophobic surfactant is mixed, the replacement rate is decreased. When the replacement rate is increased, many pores are present at the surface of the glove and therefore abrasion resistance and peel strength tends to be deteriorated, and when the replacement rate is decreased, the shape and size of the pores become uniform and hand touch tends to be improved, but strength is not so affected.

The amount of the surfactant added is appropriately determined according to the polyurethane resin to be used, and the amount is preferably 5 parts by weight or less, and more preferably 3 parts by weight or less based on 100 parts by weight of the solid content of the polyurethane resin. If the amount of the surfactant is more than 5 parts by weight, a further effect is not achieved, and to the contrary, foams tend to be produced in the polyurethane resin solution, which causes the appearance and strength properties to be deteriorated due to foams.

As a method for forming a porous coating layer on a raw glove, for example, a wet process may be used for the case of a polyurethane resin. Herein, the wet process is a method in which a raw glove is fitted on a hand mold for dipping and the raw glove fitted on the hand mold is gradually dipped into a polyurethane resin solution formed by dissolving a polyurethane resin in a solvent predominantly comprised of a hydrophilic solvent such as dimethylformamide, dimethylsulfoxide or dimethylacetoamide to allow the polyurethane resin solution to adhere to the raw glove while impregnating the raw glove with the polyurethane resin solution. Then the hand mold is pulled up slowly and the excessive resin solution is removed through dripping of the solution, and the hand mold is dipped into water or warm water to replace the hydrophilic solvent with the water or warm water, and thereby the polyurethane resin gels in a porous state.

In this method, by performing the extraction of the hydrophilic solvent into water or warm water and replacing the hydrophilic solvent with the water or warm water, the polyurethane resin which has solvated gels in a porous state. Furthermore, by performing the extraction of the hydrophilic solvent into water or warm water after impregnating the raw glove being a fiber base material with the polyurethane resin solution, the raw glove is brought into close contact with the polyurethane resin. Thereby, a porous coating layer having excellent moisture permeability and excellent flexibility is formed.

In order to control the porous coating layer so as to have a structure that is the object of the present invention, it is useful to control the process of the extraction of the solvent in the polyurethane resin solution into water or warm water or the process of the replacement of the solvent in the polyurethane resin solution with water or warm water in wet processing. When the extraction rate or the replacement rate is too fast, there is a tendency that the number of pores on the glove surface side in the porous coating layer to be formed is increased. Consequently the thickness of the resin forming a pore becomes small to decrease the strength of the porous coating layer. On the other hand, when the extraction rate or the replacement rate is too slow, pores are not formed and the resin layer becomes nonporous, and touch feeling of the glove is hard and the moisture permeability tends to be lost.

Hereinafter, a specific method for controlling the porous coating layer will be described. In addition, in the following description, water includes warm water.

### Method 1 (an organic solvent is added to an extraction solution):

A first method is a method in which when gloves made of a polyurethane resin are manufactured by a wet process, the extraction of the hydrophilic solvent in a polyurethane resin solution into a mixed solution (extraction solution) comprised of water and an organic solvent is performed and the replacement of the hydrophilic solvent with the mixed solution of water and an organic solvent is performed. The amount of the organic solvent added to water is appropriately determined according to the solvent to be used, and the amount thereof is preferably 0.01 to 20% by weight. When the amount is less than 0.01% by weight, since the effect of controlling the replacement rate is not achieved, a desired porous coating layer is not obtained. On the other hand, when the amount is more than 20% by weight, a desired porous coating layer is not obtained since the replacement of the hydrophilic solvent in the resin solution hardly takes place, or the gelation of the polyurethane resin through the replacement of the hydrophilic solvent with the mixed solution does not take place well or the coating layer becomes nonporous and hard even if the gelation of the polyurethane resin takes place. Furthermore, there is a tendency that a uniform coating layer is not formed. In addition, an organic solvent and water become a mixed solution or a dispersion solution.

The organic solvent is appropriately determined according to the polyurethane resin to be used or how to control a structure of the porous coating layer of the glove, and an organic solvent with a solubility parameter (SP value) of 10.5 or less is preferred, an organic solvent with a solubility parameter of 6.0 to 10.5 is more preferred, and an organic solvent with a solubility parameter of 8.0 to 10.5 is furthermore preferred. When the SP value is more than 10.5, a desired structure of the porous coating layer is hardly obtained. Further, when the SP value is less than 6.0, it is not preferred since the organic solvent is extremely low in the compatibility with the polyurethane resin solution and does not function as an extraction solution, and as a result, a desired porous coating layer is not formed.

Examples of the organic solvent with an SP value of 10.5 or less include ethylbenzene (8.7), toluene (8.9), xylene (8.9), ethyl acetate (9.0), tetrahydrofurane (9.2), methyl ethyl ketone (9.3), methyl acetate (9.6), and methyl cellosolve (9.9). These organic solvents may be used singly or in combination of two or more. Further, a solvent having an SP value of 10.5 or more or an additive such as a surfactant may be used together to an extent that control of the structure of the porous coating layer is not disturbed.

Further, other solvents may be mixed in the polyurethane resin solution to an extent that the polyurethane resin is not precipitated and a coating can be formed by a wet process.

Herein, the SP value is a value represented by the following equation: (SP)² = ΔE/V = (ΔH - RT)/V = d(CE)/M. SP values are cited from "Handbook of Plastic Processing Techniques" (June 12, 1995, edited by The Society of Polymer Science, Japan, published by Nikkan Kogyo Shimbun Ltd., p1474, Table 3.21, SP values of various solvents).

In the above equation; ΔE: evaporation energy (kcal/mol), V: molar volume (cm³/mol), ΔH: evaporation energy (kcal/mol), R: gas constant, M: gram molecular weight (g/mol), T: absolute temperature (K), d: density (g/cm³), and CE: cohesive energy (kcal/mol), respectively.

### Method 2 (an organic solvent is added to a resin solution):

A second method is a method in which when gloves made of a polyurethane resin are manufactured by a wet process, an organic solvent other than the hydrophilic solvent as a main solvent is mixed in a polyurethane resin solution. An amount of the organic solvent mixed is appropriately determined as required, and the amount thereof is preferably 1 to 200 parts by weight, and more preferably 10 to 100 parts by weight based on 100 parts by weight of the resin solid content. When the amount of the organic solvent is less than 1 part by weight, since the effect of controlling the replacement rate is not achieved, a desired structure of a porous coating layer is not obtained. On the other hand, when the amount is more than 200 parts by weight, there is a tendency that a desired structure of the porous coating layer is not obtained since stability of the polyurethane resin solution is deteriorated and the resulting porous coating layer becomes nonporous and hard because of a slow replacement rate.

A type of the organic solvent is appropriately determined according to the polyurethane resin to be used or how to control a structure of the porous coating layer of the glove, and an organic solvent with a solubility parameter (SP value) of 10.5 or less is preferred, an organic solvent with a solubility parameter of 6.0 to 10.5 is more preferred, and an organic solvent with a solubility parameter of 8.0 to 10.5 is furthermore preferred. Specifically, the organic solvent may be the same as that to be added to water as described above, and these organic solvents may be used alone or in combination of two or more species. Further, a solvent having an SP value of 10.5 or more or a mixing substance may be used together to an extent that control of the structure of the porous coating layer is not disturbed. By these methods, a porous coating layer, in which a porous structure is controlled and abrasion resistance and peel strength are excellent in addition to moisture permeability and flexibility, is formed.

A viscosity of a resin solution generally depends on the resin concentration of the resin solution, and when the resin concentration is high, the viscosity is also high. Accordingly, since the amount of a resin adhering to a raw glove is increased and the resin content occupying the surfaces of the raw glove and spaces between fibers of the raw glove is increased, the density of the resin may increase and the coating layer may become a hard layer in which the overall number of voids is small. In this case, the flexibility which is an advantage of a porous property is lost and the adequate slip resistant effect is not achieved. Further, since the coating layer is hard, the workability of the glove is low. On the contrary, when the resin concentration is low, the viscosity is also low. Accordingly, since the amount of the resin adhering to the raw glove is decreased and the resin content occupying the surfaces of the raw glove and spaces between fibers of the raw glove is decreased, the coating layer may become a layer in which the density of the resin is low and the number of voids is large. In a case where the coating layer has many voids as described above, since the coating layer is too soft, abrasion resistance of the glove is insufficient and practicality of the glove is low. Further, since a part of the raw glove fibers being base materials, to which the resin does not adhere, is exposed to the surface of the glove, the slip resistant effect is decreased. From the reason described above, the viscosity of the resin solution is preferably 50 to 2000 cps and the resin concentration is preferably 4 to 17% by weight.

A temperature of the polyurethane resin solution is preferably 10 to 40°C to suppress excessive volatilization of a solvent and prevent dew condensation.

The hand mold fit with the raw glove is dipped into the polyurethane resin solution, and a temperature of the hand mold at this time is preferably about 10 to 100°C. In actual production, since a cooling facility is required in order to constantly keep the temperature of the hand mold below 10°C, and stable control of the temperature is difficult and the facility for cooling becomes large-scale, it is not realistic. When the temperature of the hand mold is higher than 100°C, since the viscosity of the polyurethane resin solution adhering to the raw glove is decreased to increase the fluidity of the polyurethane resin solution, the polyurethane resin may adhere to the glove unevenly and the resulting coating layer may become uneven. The temperature is more preferably 20 to 70°C.

In the step of performing the extraction of the hydrophilic solvent in the polyurethane resin solution into water to replace the hydrophilic solvent with water, the water temperature can be appropriately determined, and it is preferably 20 to 70°C. The water temperature has an effect on a replacement rate of the hydrophilic solvent in the polyurethane resin solution with water, and when the temperature is high, the replacement rate is increased.

When the water temperature is higher than 70°C, there is a tendency that the replacement rate increases and the formation of the coating layer on the surface of the polyurethane resin solution becomes fast. As a result, a compact porous layer is formed on the outermost surface, but the replacement rate of inside of the resin solution becomes slow since the gelation rate at the outermost surface is fast, and the resulting coating layer generally tends to be a rough state in which a porous structure is uneven. A tacky property is intense at the surface and hand touch is impaired, and strength such as abrasion resistance of a glove tends to be deteriorated since the porous structure is uneven.

When the water temperature is lower than 20°C, there is a tendency that since the replacement rate of the hydrophilic solvent in the polyurethane resin solution with water decreases, it takes much time to precipitate the polyurethane resin, and it is not efficient. Further, the fact that the replacement rate decreases can cause the hydrophilic solvent to remain in the precipitated polyurethane resin, and there is a possibility that polyurethane is dissolved again due to remaining of the hydrophilic solvent and the porous structure is broken. Further, when the hydrophilic solvent remains, it is not preferred since the hydrophilic solvent can adversely affect the human health.

A time for the replacement is a time required to extract the hydrophilic solvent in the polyurethane resin solution and is preferably 30 to 90 minutes. When the time is less than 30 minutes, it is possible that the hydrophilic solvent remains excessively in the polyurethane resin. Since the polyurethane resin is dissolved again in the solvent remaining excessively, the resulting coating layer tends to be nonporous and hard. Further, even when the time is more than 90 minutes, further extraction of the solvent is not performed and the solvent is in an equilibrium state where the solvent is adequately extracted.

With respect to drying conditions, the temperature and time for removing water and the solvent slightly remaining are appropriately determined, and since the thermoplastic polyurethane resin is melted when the temperature is too high, the temperature and time to prevent melting of the resin are preferred.

In addition, a part of the raw glove to be dipped is not particularly limited and the coating layer of the polyurethane resin is formed at any part of the glove. That is, the porous coating layer may be formed at least at a desired part of the raw glove and the porous coating layer may be formed, for example, on the entire outer surface of the raw glove, or on only a finger tip, or on only a palm portion so that the glove does not have a coated backside.

Further, the material and shape of the hand mold to be used are not particularly limited and any material and shape may be used. Examples of the material of the hand mold include ceramics, iron, or aluminum, and decorations such as patterns may be provided on the surface of the hand mold as required. Furthermore, the surface of the hand mold may be surface treated in order to prevent rust or to improve processability. Examples of the type of the surface treatment include polymer coating using a fluororesin or a silicone resin. The shape of the hand mold is formed by reproducing a hand of humans stereoscopically, and the number of fingers, lengths and thicknesses of fingers, palm perimeter and wrist perimeter can be arbitrarily determined. The shape can be formed into a mitten shape as required.

Hereinafter, the present invention will be described in more detail by way of examples and comparative examples, but the present invention is not limited thereto.

In addition, "part(s)" refers to "part(s) by weight" in the following examples and comparative examples, unless otherwise specified. Further, physical properties of a glove were measured or evaluated by the following methods.

### Abrasion Resistance:

The abrasion resistance was evaluated by measuring a weight of a resin worn when the coating layer of the glove was rubbed with waterproof abrasive paper (manufactured by Sankyo-Rikagaku Co., Ltd., type DCC J-4847, grain: #1500). Rubbing was performed by the following procedure.

The coating layer of the glove was cut off into a rectangular piece of 2.0 cm × 4.0 cm to prepare samples. Using a rubbing tester for color fastness (manufactured by DAIEI KAGAKU SEIKI MFG. Co., Ltd., model: RT-200) as a testing equipment, a load of 9 kPa was applied onto the above sample and the sample was moved reciprocally with the sample brought into contact with the waterproof abrasive paper. In this test, one reciprocating motion was counted as one count and a weight of a resin worn at 150 counts was measured. A less weight of a resin worn indicates that abrasion resistance of the coating layer is excellent.

### Peel Strength of Coating Layer:

Using a commercially available cloth pressure-sensitive adhesive tape (manufactured by Konishi Co., Ltd., VF050) as a pressure-sensitive adhesive, the pressure-sensitive adhesive tape was pulled up by about 10 cm with fingers in a state of wearing gloves and was torn off. In this time, the pressure-sensitive adhesive face of the pressure-sensitive adhesive tape was stuck on the coating layer in a finger portion of the glove. Next, the pressure-sensitive adhesive tape stuck on the coating layer in the finger portion was peeled off and the state in which the resin was migrated to the surface of the pressure-sensitive adhesive tape was visually observed and elevated according to the following criteria.
A: A ratio of migration area to the contact area of the pressure-sensitive adhesive is 0% (substantially no peeling)
B: A ratio of migration area to the contact area of the pressure-sensitive adhesive is more than 0% and 30% or less
C: A ratio of migration area to the contact area of the pressure-sensitive adhesive is more than 30% and70% or less
D: A ratio of migration area to the contact area of the pressure-sensitive adhesive is more than 70%

### Moisture Permeability:

The moisture permeability was measured according to JIS L 1099 A-1 method (calcium chloride method) and evaluated according to the following criteria.
A: There is no steamy condition during wearing a glove and it is comfortable (5000 g/m²·24 hours or more)
B: There is little steamy condition during wearing a glove (1000 g/m²·24 hours or more and less than 5000 g/m²·24 hours)
C: There is slightly steamy condition during wearing a glove (500 g/m²·24 hours or more and less than 1000 g/m²·24 hours)
D: There is a steamy condition during wearing a glove and it is uncomfortable (less than 500 g/m²·24 hours)

### Flexibility:

10 panelists evaluated the flexibility in a state of wearing a glove according to the following criteria.
A: The glove was very flexible and has excellent workability
B: The glove was slightly flexible and has good workability
C: The glove was slightly hard and has slightly low workability
D: The glove was very hard and has low workability

### Example 1

100 parts (resin portion 30 parts, DMF 70 parts) of a polyurethane resin for wet processing "CRISVON 8006HVLD (produced by DIC Corporation)" and 200 parts of N,N-dimethylformamide (DMF) were mixed to prepare a polyurethane resin solution.

A seamless knitted glove knitted with woolly nylon yarns using a 13 gauge knitting machine was used as a raw glove, and the glove was put on a hand mold for dipping and the glove put on the hand mold was gradually dipped into the above-mentioned raw material solution to allow the polyurethane resin solution to adhere to the raw glove while impregnating the raw glove with the polyurethane resin solution, and then the hand mold was pulled up slowly and the excessive resin solution was removed through dripping of the solution. Next, the hand mold was dipped into warm water of 60°C in which methyl ethyl ketone (MEK) (SP value: 9.3) was mixed in the proportion of 5% by weight (extraction solution, the same applies hereinafter) for 60 minutes to perform the extraction of a hydrophilic solvent in the resin solution into the warm water containing methyl ethyl ketone and replace N,N-dimethylformamide with the warm water and methyl ethyl ketone. Thereby, a porous coating layer of a polyurethane resin was formed. Thereafter, the hand mold was taken out of the warm water and dried at 130°C for 30 minutes. After the completion of drying, the hand mold was cooled at room temperature and the glove was released from the hand mold to obtain a working glove.

Production conditions of the glove, characteristics of the coating layer and physical properties of the glove are shown in Table 1. Further, with respect to a middle finger of the obtained glove, measurement data of an area of a pore, a smallest thickness of each resin layer existing between pores (hereinafter, referred to as "thickness of resin layer between pores"), a void ratio and the number of pores are shown in Table 3. In addition, in Table 3, the area of a pore and the thickness of a resin layer between pores are shown generally in increasing order for convenience.

In the obtained glove, a gelation rate of the polyurethane resin solution became slower than usual due to methyl ethyl ketone (MEK) added to warm water, and consequently, with respect to the porous structure of the coating layer, the area (size) of a pore included that of 0.80 to 77.61 µm² and an average of the thickness of a resin layer between pores was ontrolled to 3.4 µm. Furthermore, the void ratio was controlled to be 15.5% and the number of pores was controlled to be 15. The obtained glove was superior in abrasion resistance and peel strength and superior in moisture permeability and flexibility by virtue of the controlled porous structure.

### Examples 2 to 4

Working gloves were obtained by following the same procedure as in Example 1 except for changing the kind and the amount used of the hydrophilic solvent as shown in Table 1.

Production conditions of the gloves, characteristics of the coating layer and physical properties of the gloves are shown in Table 1. Further, with respect to a middle finger of the obtained gloves, measurement data of an area of a pore, a thickness of a resin layer between pores for the respective pores, a void ratio and the number of pores are shown in Table 3.

In the obtained gloves, a gelation rate of the polyurethane resin became slower than usual due to n-hexane, ethylbenzene and methyl acetate, which were added to warm water, and consequently, in the glove in Example 2, with respect to the porous structure of the coating layer, the area (size) of a pore included that of 13.36 to 77.05 µm² and an average of the thickness of a resin layer between pores was controlled to 4.2 µm. Furthermore, the void ratio was controlled to be 70.8% and the number of pores was controlled to be 20.

In the glove in Example 3, with respect to the porous structure of the coating layer, the area (size) of a pore included that of 0.98 to 10.87 µm² and an average of the thickness of a resin layer between pores was controlled to 68.2 µm. Furthermore, the void ratio was controlled to be 0.9% and the number of pores was controlled to be 3.

Furthermore, in the glove in Example 4, with respect to the porous structure of the coating layer, the area (size) of a pore included that of 23.16 to 58.43 µm² and an average of the thickness of a resin layer between pores was controlled to 173 µm. Furthermore, the void ratio was controlled to be 4.3% and the number of pores was controlled to be 2.

The obtained gloves were all superior in abrasion resistance and peel strength and superior in moisture permeability and flexibility by virtue of the controlled porous structures.

### Comparative Example 1

A working glove was obtained by following the same procedure as in Example 1 except for using an extraction solution formed by not mixing methyl ethyl ketone in warm water.

Production conditions of the glove, characteristics of the coating layer and physical properties of the glove are shown in Table 1. Further, with respect to a middle finger of the obtained glove, measurement data of an area of a pore, a thickness of a resin layer between pores for the respective pores, a void ratio and the number of pores are shown in Table 3.

In the obtained glove, a gelation rate of the polyurethane resin was fast and with respect to the porous structure of the coating layer, pores were communicated with one another and did not exist as a plurality of separate pores. The void ratio was as large as 89.4% and the number of pores having a predetermined area (size) was 0. The obtained glove was superior in moisture permeability and flexibility by virtue of the porous structure of the coating layer, but it was inferior in abrasion resistance and peel strength since the area (size) of a pore and the void ratio were large.

In addition, an electron micrograph (a magnification of 500 times) of the obtained glove is shown in Fig. 4.

### Comparative Examples 2 to 5

Working gloves were obtained by following the same procedure as in Example 1 except for changing the kind and the amount used of the hydrophilic solvent as shown in Table 1.

Production conditions of the gloves, characteristics of the coating layer and physical properties of the gloves are shown in Table 1. Further, with respect to a middle finger of the obtained gloves, measurement data of an area of a pore, a thickness of a resin layer between pores for the respective pores, a void ratio and the number of pores are shown in Table 3.

In the glove obtained in Comparative Example 2, since the SP value of ethylene glycol added to warm water was large, there was no effect of reducing a gelation rate of the polyurethane resin, and consequently, as with Comparative Example 1, the gelation rate of the polyurethane resin was fast and with respect to the porous structure of the coating layer, pores were communicated with one another and did not exist as a plurality of separate pores. The void ratio was as large as 82.6% and the number of pores having a predetermined area (size) was 0. The obtained glove was superior in moisture permeability and flexibility by virtue of the porous structure of the coating layer, but it was inferior in abrasion resistance and peel strength since the area (size) of a pore and the void ratio were large.

Further, in the glove obtained in Comparative Example 3, since the amount of methyl ethyl ketone (MEK) added to warm water was too small, there was no effect of reducing a gelation rate of the polyurethane resin, and consequently, as with Comparative Example 1, the gelation rate of the polyurethane resin was fast and with respect to the porous structure of the coating layer, pores were communicated with one another and did not exist as a plurality of separate pores. The void ratio was as large as 85.5% and the number of pores having a predetermined area (size) was 0. The obtained glove was superior in moisture permeability and flexibility by virtue of the porous structure of the coating layer, but it was inferior in abrasion resistance and peel strength since the area (size) of a pore and the void ratio were large.

Further, in the gloves obtained in Comparative Examples 4 and 5, since the amount of methyl ethyl ketone (MEK) added to warm water was excessive, a gelation rate of the polyurethane resin became slow excessively to interfere with the formation of pores and further the porous layer of the coating layer was dissolved again since methyl ethyl ketone remained in the gelled polyurethane resin after extracting the hydrophilic solvent. In the glove in Comparative Example 4, the proportion of the nonporous portion was large and the void ratio was small and 0.2%. Further, with respect to the porous structure of the coating layer, the number of pores was 2 and the area (size) of a pore included that of 0.8 to 3.65 µm², but an average of the thickness of a resin layer between pores was as large as 191 µm and many nonporous portions were present. The obtained glove was superior in abrasion resistance and peel strength since many nonporous structures were present in the coating layer, but it was inferior in moisture permeability and flexibility.

Further, in the glove in Comparative Example 5, the obtained coating layer was comprised of only the nonporous portion in which there were no pores. Accordingly, the void ratio was 0% and the number of pores was 0. The obtained glove was superior in abrasion resistance and peel strength by virtue of the nonporous structure of the coating layer, but it was inferior in moisture permeability and flexibility.

### Example 5

100 parts (resin portion 30 parts, DMF 70 parts) of a polyurethane resin for wet processing "CRISVON 8006HVLD (produced by DIC Corporation)", 190 parts of N,N-dimethylformamide (DMF), and 10 parts by weight of methyl ethyl ketone (MEK) (SP value: 9.3) were mixed to prepare a polyurethane resin solution.

A seamless knitted glove knitted with woolly nylon yarns using a 13 gauge knitting machine was used as a raw glove, and the glove was put on a hand mold for dipping and the glove put on the hand mold was gradually dipped into the above-mentioned raw material solution to allow the polyurethane resin solution to adhere to the raw glove while impregnating the raw glove with the polyurethane resin solution, and then the hand mold was pulled up slowly and the excessive resin solution was removed through dripping of the solution. Next, the hand mold was dipped into warm water of 60°C for 60 minutes to perform the extraction of a hydrophilic solvent and the like in the resin solution into the warm water and replace N,N-dimethylformamide and the like with the warm water. Thereby, a porous coating layer of a polyurethane resin was formed. Thereafter, the hand mold was taken out of the warm water and dried at 130°C for 30 minutes. After the completion of drying, the hand mold was cooled at room temperature and the glove was released from the hand mold to obtain a working glove.

Production conditions of the glove, characteristics of the coating layer and physical properties of the glove are shown in Table 2. Further, with respect to a middle finger of the obtained glove, measurement data of an area of a pore, a thickness of a resin layer between pores for the respective pores, a void ratio and the number of pores are shown in Table 3.

In the obtained glove, a gelation rate of the polyurethane resin solution became slower than usual due to methyl ethyl ketone added to the polyurethane resin solution, and consequently, with respect to the porous structure of the coating layer, the area (size) of a pore included that of 0.82 to 40.23 µm² and an average of the thickness of resin layer existing between the pores was controlled to be 8.5 µm. Furthermore, the void ratio was controlled to be 8.1% and the number of pores was controlled to be 12. The obtained glove was superior in abrasion resistance and peel strength and superior in moisture permeability and flexibility by virtue of the controlled porous structure.

In addition, an electron micrograph (a magnification of 500 times) of the obtained glove is shown in Fig. 3.

### Examples 6 to 9

Working gloves were obtained by following the same procedure as in Example 5 except for changing the kind and the amount used of the hydrophilic solvent as shown in Table 2.

Production conditions of the gloves, characteristics of the coating layer and physical properties of the gloves are shown in Table 2. Further, with respect to a middle finger of the obtained gloves, measurement data of an area of a pore, a thickness of a resin layer between pores for the respective pores, a void ratio and the number of pores are shown in Table 3.

In the obtained gloves, a gelation rate of the polyurethane resin became slower than usual due to ethylbenzene, methyl ethyl ketone (MEK) and n-hexane, which were added to warm water, and consequently, in the glove in Example 6, with respect to the porous structure of the coating layer, the area (size) of a pore included that of 16.36 to 77.40 µm² and an average of the thickness of a resin layer between pores was controlled to 14.5 µm. Furthermore, the void ratio was controlled to be 78.3% and the number of pores was controlled to be 23.

In the glove in Example 7, with respect to the porous structure of the coating layer, the area (size) of a pore included that of 69.5 to 78.35 µm² and an average of the thickness of a resin layer between pores was controlled to 16.2 µm. Furthermore, the void ratio was controlled to be 72% and the number of pores was controlled to be 18.

Further, in the glove in Example 8, with respect to the porous structure of the coating layer, the area (size) of a pore included that of 1.05 to 15.60 µm² and an average of the thickness of a resin layer between pores was controlled to 10.4 µm. Furthermore, the void ratio was controlled to be 2.8% and the number of pores was controlled to be 6.

Furthermore, in the glove in Example 9, with respect to the porous structure of the coating layer, the area (size) of a pore included that of 0.94 to 14.21 µm² and an average of the thickness of a resin layer between pores was controlled to 86.6 µm. Furthermore, the void ratio was controlled to be 1.8% and the number of pores was controlled to be 4.

All of the obtained gloves were superior in abrasion resistance and peel strength and superior in moisture permeability and flexibility by virtue of the controlled porous structures.

### Comparative Examples 6 to 8

Working gloves were obtained by following the same procedure as in Example 5 except for changing the species and the amount used of the hydrophilic solvent as shown in Table 2.

Production conditions of the gloves, characteristics of the coating layer and physical properties of the gloves are shown in Table 2. Further, with respect to a middle finger of the obtained gloves, measurement data of an area of a pore, a thickness of a resin layer between pores for the respective pores, a void ratio and the number of pores are shown in Table 3.

In the glove obtained in Comparative Example 6, since the SP value of isopropyl alcohol added to the polyurethane resin solution was large, there was no effect of reducing a gelation rate of the polyurethane resin solution, and consequently the gelation rate of the polyurethane resin solution was increased and with respect to the porous structure of the coating layer, pores were communicated with one another and did not exist as a plurality of separate pores. The void ratio was 90.7% and the number of pores having a predetermined area (size) was 0. The obtained glove was superior in moisture permeability and flexibility by virtue of the porous structure of the coating layer, but it was inferior in abrasion resistance and peel strength since the area (size) of a pore and the void ratio were large.

Further, in the gloves in Comparative Examples 7 and 8, since the amount of methyl ethyl ketone (MEK) added to the polyurethane resin solution was excessive, a gelation rate of the polyurethane resin became slow excessively, and in the glove in Comparative Example 7, the proportion of the nonporous portion was large and the void ratio was small and 0.2%. Further, with respect to the porous structure of the coating layer, the number of pores was 2 and an average of the thickness of a resin layer between pores was controlled to 66.4 µm, but the area (size) of a pore was as small as 0.66 to 2.96 µm². The obtained glove was superior in abrasion resistance and peel strength since many nonporous structures were present in the coating layer, but it was inferior in moisture permeability and flexibility.

Further, in the glove in Comparative Example 8, the pore was not formed and the obtained coating layer was comprised of only the nonporous portion in which there were no pores. Accordingly, the void ratio was 0% and the number of pores was 0. The obtained glove was superior in abrasion resistance and peel strength by virtue of the nonporous structure of the coating layer, but it was inferior in moisture permeability and flexibility.

An electron micrograph (a magnification of 500 times) of the glove in Comparative Example 8 is shown in Fig. 5.

**Table 1**

| | Resin solution | | | Extraction liquid | | | Coating layer | | | | Properties of glove | | | | |
|---|---|---|---|---|---|---|---|---|---|---|---|---|---|---|---|
| | | | | | | | Area of pores | Thickness of resin layer between pores | Void ratio | Number of pores | Abrasion resistance | Peel strength | Moisture permeability | Moisture permeability | Flexibility |
| | Kind | (Parts) | DMF (Parts) | Kind | Organic solvent | (%) | (µm²) | (µm) | (%) | (pieces) | (g) | | (g/m²·24hr) | | |
| Ex. 1 | CRISVON 8006HVLD | 100 | 200 | Warm water (60°C) | MEK (SP: 9.3) | 5 | 0.8∼77.61 | 3.4 | 15.5 | 15 | 4.0 | A | 9000 | A | A |
| | Resin: 30 Parts | | | | | | | | | | | | | | |
| | DMF : 70 Parts | | | | | | | | | | | | | | |
| Ex. 2 | CRISVON 8006HVLD | 100 | 200 | Warm water (60°C) | n-hexane (SP:7.2) | 0.06 | 13.36 ∼77.05 | 4.2 | 70.8 | 20 | 5.0 | B | 9306 | A | A |
| | Resin: 30 Parts | | | | | | | | | | | | | | |
| | DMF : 70 Parts | | | | | | | | | | | | | | |
| Ex. 3 | CRISVON 8006HVLD | 100 | 200 | Warm water (60°C) | ethyl benzene (SP: 8.7) | 0.5 | 0.98∼10.87 | 68.2 | 0.9 | 3 | 4.4 | A | 8440 | A | A |
| | Resin: 30 Parts | | | | | | | | | | | | | | |
| | DMF : 70 Parts | | | | | | | | | | | | | | |
| Ex. 4 | CRISVON 8006HVLD | 100 | 200 | Warm water (60°C) | methyl acetate (SP:9.6) | 18 | 23.16∼58.43 | 173 | 4.3 | 2 | 4.1 | A | 8445 | A | B |
| | Resin: 30 Parts | | | | | | | | | | | | | | |
| | DMF : 70 Parts | | | | | | | | | | | | | | |
| Comp. Ex 1 | CRISVON 8006HVLD | 100 | 200 | Warm water (60°C) | - | - | 1696.28 | - | 89.4 | 0 | 9.8 | C | 11020 | A | A |
| | Resin: 30 Parts | | | | | | | | | | | | | | |
| | DMF : 70 Parts | | | | | | | | | | | | | | |
| Comp. Ex 2 | CRISVON 8006HVLD | 100 | 200 | Warm water (60°C) | ethylene glycol (SP: 14.2) | 5 | 1567.37 | - | 82.6 | 0 | 9.2 | C | 10611 | A | A |
| | Resin: 30 Parts | | | | | | | | | | | | | | |
| | DMF : 70 Parts | | | | | | | | | | | | | | |
| Comp. Ex 3 | CRISVON 8006HVLD | 100 | 200 | Warm water (60°C) | MEK (SP:9.3) | 0.005 | 1622.36 | 0.5 | 85.5 | 0 | 9.9 | D | 10055 | A | A |
| | Resin: 30 Parts | | | | | | | | | | | | | | |
| | DMF : 70 Parts | | | | | | | | | | | | | | |
| Comp. Ex 4 | CRISVON 8006HVLD | 100 | 200 | Warm water (60°C) | MEK (SP: 9.3) | 22 | 0.8∼3.65 | 191 | 0.2 | 2 | 3.9 | A | 920 | C | C |
| | Resin: 30 Parts | | | | | | | | | | | | | | |
| | DMF : 70 Parts | | | | | | | | | | | | | | |
| Comp. Ex 5 | CRISVON 8006HVLD | 100 | 200 | Warm water (60°C) | MEK (SP: 9.3) | 25 | 0 | - | 0 | 0 | 3.9 | A | 360 | D | C |
| | Resin: 30 Parts | | | | | | | | | | | | | | |
| | DMF : 70 Parts | | | | | | | | | | | | | | |

**Table 2**

| | Resin solution | | | | | Extraction liquid | Coating layer | | | | Properties of glove | | | | |
|---|---|---|---|---|---|---|---|---|---|---|---|---|---|---|---|
| | | | | | | | Area of pores | Thickness of resin layer between pores | Void ratio | Number of pores | Abrasion resistance | Peel strength | Moisture permeability | Moisture permeability | Flexibility |
| | Kind | (Parts) | DMF (Parts) | Organic solvent | (Parts) * | Kind | (*µ*m²) | (*µ* m) | (%) | (pieces) | (g) | | (g/m²·24hr) | | |
| Ex. 5 | CRISVON 8006HVLD | 100 | 190 | MEK (SP: 9.3) | 10 (33) | Warm water (60°C) | 0.82∼40.23 | 8.5 | 8.1 | 12 | 4.5 | A | 8878 | A | A |
| | Resin: 30 Parts | | | | | | | | | | | | | | |
| | DMF : 70 Parts | | | | | | | | | | | | | | |
| Ex. 6 | CRISVON 8006HVLD | 100 | 199 | ethylbenzene (SP: 8.7) | 1 (3.3) | Warm water (60°C) | 16.36∼77.40 | 14.5 | 78.3 | 23 | 5.8 | B | 9625 | A | A |
| | Resin: 30 Parts | | | | | | | | | | | | | | |
| | DMF : 70 | | | | | | | | | | | | | | |
| Ex.7 | CRISVON 8006HVLD | 100 | 197 | MEK (SP: 9.3) | 3 (9.9) | Warm water (60°C) | 69.5∼78.35 | 16.2 | 72 | 18 | 5.5 | B | 9166 | A | A |
| | Resin: 30 Parts | | | | | | | | | | | | | | |
| | DMF : 70 Parts | | | | | | | | | | | | | | |
| Ex.8 | CRISVON 8006HVLD | 100 | 190 | n--hexane (SP: 7.2) | 10 (33) | Warm water (60°C) | 1.05∼15.60 | 10.4 | 2.8 | 6 | 4.0 | A | 9023 | A | B |
| | Resin: 30 Parts | | | | | | | | | | | | | | |
| | DMF : 70 Parts | | | | | | | | | | | | | | |
| Ex.9 | CRISVON 8006HVLD | 100 | 145 | MEK (SP: 9.3) | 55 (183) | Warm water (60°C) | 0.94∼14.21 | 86.6 | 1.8 | 4 | 4.0 | A | 7222 | A | B |
| | Resin: 30 Parts | | | | | | | | | | | | | | |
| | DMF : 70 | | | | | | | | | | | | | | |
| Comp. Ex. 6 | CRISVON 8006HVLD | 100 | 190 | isopropyl alcohol (SP: 11.2) | 10 (33) | Warm water (60°C) | 1720.66 | - | 90.7 | 0 | 15.3 | D | 10025 | A | A |
| | Resin: 30 Parts | | | | | | | | | | | | | | |
| | DMF : 70 Parts | | | | | | | | | | | | | | |
| Comp. Ex. 7 | CRISVON 8006HVLD | 100 | 136 | MEK (SP: 9.3) | 64 (211.2) | Warm water (60°C) | 0.66∼2.96 | 66.4 | 0.2 | 2 | 3.9 | A | 826 | C | C |
| | Resin: 30 Parts | | | | | | | | | | | | | | |
| | DMF : 70 | | | | | | | | | | | | | | |
| Comp. Ex 8 | CRISVON 8006HVLD | 100 | 87 | MEK (SP: 9.3) | 113 (373) | Warm water (60°C) | 0 | - | 0 | 0 | 4.0 | A | 400 | D | C |
| | Resin: 30 Parts | | | | | | | | | | | | | | |
| | DMF : 70 Parts | | | | | | | | | | | | | | |

| | | | | | | | | | | | | | | | |
|---|---|---|---|---|---|---|---|---|---|---|---|---|---|---|---|
| * Figures in the parentheses indicate parts based on 100 parts of resin | | | | | | | | | | | | | | | |

**Table 3**

| Items measured | | Examples | | | | | | | | | Comparative Examples | | | | | | | |
|---|---|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 | 7 | 8 |
| | 1 | 0.8 | 13.36 | 0.98 | 23.16 | 0.82 | 16.36 | 69.5 | 1.05 | 0.94 | | | | 0.8 | | | 0.66 | |
| | 2 | 2.2 | 52.02 | 4.36 | 58.43 | 0.96 | 36.58 | 70.23 | 2.36 | 7.93 | | | | 3.65 | | | 2.96 | |
| | 3 | 2.33 | 59.95 | 10.87 | | 1.15 | 56.33 | 71.35 | 7.56 | 11.05 | | | | | | | | |
| | 4 | 2.58 | 60.39 | | | 1.62 | 58 | 74.69 | 10.25 | 14.21 | | | | | | | | |
| | 5 | 3.52 | 62.55 | | | 2.79 | 58.32 | 75.2 | 15.55 | | | | | | | | | |
| | 6 | 7.04 | 67.58 | | | 3.41 | 59.01 | 75.69 | 15.6 | | | | | | | | | |
| | 7 | 9.6 | 67.98 | | | 4.56 | 60.23 | 75.95 | | | | | | | | | | |
| | 8 | 13.26 | 68.05 | | | 5.89 | 62.86 | 76.36 | | | | | | | | | | |
| | 9 | 13.38 | 70.01 | | | 23.39 | 65.37 | 76.58 | | | | | | | | | | |
| Area of pores | 10 | 13.96 | 72.33 | | | 32.56 | 68.66 | 77.03 | | | | | | | | | | |
| | 11 | 15.37 | 72.39 | | | 36.25 | 69.23 | 77.23 | | | | | | | | | | |
| | 12 | 17.91 | 73.32 | | | 40.23 | 70.11 | 77.35 | | | | | | | | | | |
| (*µ*m²) | 13 | 38.96 | 73.35 | | | | 70.56 | 77.79 | | | | | | | | | | |
| | 14 | 76.25 | 73.68 | | | | 70.87 | 77.82 | | | | | | | | | | |
| | 15 | 77.61 | 73.92 | | | | 70.98 | 77.98 | | | | | | | | | | |
| | 16 | | 75.5 | | | | 71.22 | 78.03 | | | | | | | | | | |
| | 17 | | 75.55 | | | | 71.56 | 78.3 | | | | | | | | | | |
| | 18 | | 76.69 | | | | 71.86 | 78.35 | | | | | | | | | | |
| | 19 | | 77.02 | | | | 72.02 | | | | | | | | | | | |
| | 20 | | 77.05 | | | | 75.21 | | | | | | | | | | | |
| | 21 | | | | | | 76.36 | | | | | | | | | | | |
| | 22 | | | | | | 77.23 | | | | | | | | | | | |
| | 23 | | | | | | 77.4 | | | | | | | | | | | |
| | Total | 294.77 | 1342.69 | 16.21 | 81.59 | 153.63 | 1486.33 | 1365.43 | 52.37 | 34.13 | 1696.28 | 1567.37 | 1622.36 | 4.45 | 0 | 1720.66 | 3.62 | 0 |
| | 1 | 0.9 | 0.9 | 13.6 | 173.0 | 1.6 | 1.2 | 1.0 | 1.2 | 92.3 | | | | 191 | | | 66.4 | |
| | 2 | 0.9 | 1.2 | 13.6 | 173.0 | 2.9 | 1.6 | 1.2 | 2.8 | 80.2 | | | | 191 | | | 66.4 | |
| | 3 | 2.3 | 1.6 | 177.3 | | 2.9 | 1.9 | 3.6 | 7.2 | 73.5 | | | | | | | | |
| | 4 | 2.7 | 2.8 | | | 1.6 | 2.8 | 5.5 | 10.5 | 100.3 | | | | | | | | |
| | 5 | 2.7 | 2.9 | | | 5.3 | 3.3 | 8.2 | 18.0 | | | | | | | | | |
| | 6 | 2.8 | 3.2 | | | 4.7 | 4.2 | 10.9 | 22.6 | | | | | | | | | |
| | 7 | 2.8 | 3.3 | | | 5.2 | 5.9 | 12.2 | | | | | | | | | | |
| | 8 | 2.9 | 3.3 | | | 5.2 | 8.8 | 12.5 | | | | | | | | | | |
| Thickness | 9 | 3.9 | 3.5 | | | 15.5 | 10.5 | 16.2 | | | | | | | | | | |
| of resin | 10 | 4.3 | 3.8 | | | 16.6 | 11.2 | 18.3 | | | | | | | | | | |
| layer | 11 | 4.7 | 3.8 | | | 17.3 | 15.6 | 20.3 | | | | | | | | | | |
| between | 12 | 4.7 | 3.9 | | | 22.8 | 16.2 | 22.5 | | | | | | | | | | |
| pores | 13 | 4.8 | 4.2 | | | | 17.7 | 25.9 | | | | | | | | | | |
| | 14 | 4.8 | 4.4 | | | | 17.7 | 29.1 | | | | | | | | | | |
| (*µ* m) | 15 | 6.4 | 4.8 | | | | 19.2 | 32.0 | | | | | | | | | | |
| | 16 | | 4.8 | | | | 20.6 | 34.1 | | | | | | | | | | |
| | 47 | | 7.5 | | | | 21.5 | 18.5 | | | | | | | | | | |
| | 18 | | 8.2 | | | | 22.1 | 19.2 | | | | | | | | | | |
| | 19 | | 8.2 | | | | 23.8 | | | | | | | | | | | |
| | 20 | | 8.5 | | | | 24.0 | | | | | | | | | | | |
| | 21 | | | | | | 25.9 | | | | | | | | | | | |
| | 22 | | | | | | 28.5 | | | | | | | | | | | |
| | 23 | | | | | | 28.5 | | | | | | | | | | | |
| | Average | 3.4 | 42 | 68.2 | 173.0 | 8.5 | 14.5 | 16.2 | 10.4 | 86.6 | - | - | - | 191.0 | - | - | 66.4 | - |
| Void ratio (%) | | 15.5 | 70.8 | 0.9 | 4.3 | 8.1 | 78.3 | 72.0 | 2.8 | 1.8 | 89.4 | 82.6 | 85.5 | 0.2 | 0 | 90.7 | 0.2 | 0 |
| Number (piec of pores es) | | 15 | 20 | 3 | 2 | 12 | 23 | 18 | 6 | 4 | 0 | 0 | 0 | 2 | 0 | 0 | 2 | 0 |

As described above, the glove of the present invention is superior in abrasion resistance and peel strength, has excellent resistance to peeling/migration to pressure-sensitive adhesive tapes, and is superior in moisture permeability and flexibility since a porous structure of a coating layer is controlled, and therefore the glove of the present invention is useful particularly as a working glove.

## Claims

1. A glove including a porous coating layer comprising a polyurethane resin provided on the surface of a glove made of a fiber, **characterized in that**
a plurality of pores having an area of 0.785 to 78.5 µm² are present, and
an average of the smallest thickness of each resin layer existing between the pores for the respective pores is 0.9 to 178 µm
in an electron-microscopic field at the time when a rectangular finger pad central portion, 40 mm away from a finger tip toward a finger pad, of a finger portion in the porous coating layer is cut off and a cross-section of 253 µm in length directed from the finger tip toward the finger pad and 2.5 to 10 µm in depth perpendicularly from a surface of the porous coating layer is observed at a magnification of 500 times with an electron microscope,
and **in that** the glove is obtainable by
(a) dipping a glove made of a fiber put on a hand mold into a polyurethane resin solution, and pulling up the hand mold to remove the excessive solution, and dipping the hand mold into water with a water temperature of 20 to 70 °C containing an organic solvent with a solubility parameter of 6.0 to 10.5 in an amount of 0.01 to 20% by weight to cause the polyurethane to gel in a porous state, or
(b) dipping a glove made of a fiber put on a hand mold into a polyurethane resin solution containing an organic solvent with a solubility parameter of 6.0 to 10.5 in an amount of 1 to 200 parts by weight based on 100 parts by weight of the resin content, pulling up the hand mold to remove the excessive solution, and dipping the hand mold into water with a water temperature of 20 to 70 °C to cause the polyurethane to gel in a porous state.

2. The glove according to claim 1, wherein a void ratio of the total area of pores having an area of not less than 0.785 µm² to an area of the electron-microscopic field is 0.3 to 75%.

3. The glove according to claim 1 or 2, wherein a number of pores having an area of 0.785 to 78.5 µm² in the electron-microscopic field is 2 to 35.

4. The glove according to any one of claims 1 to 3, wherein the thickness of the porous coating layer is 7.5 to 150 µm.

5. The glove according to claim 1, wherein the organic solvent is methyl ethyl ketone or ethylbenzene.

## Patentansprüche

1. Ein Handschuh, enthaltend eine ein Polyurethanharz umfassende poröse Beschichtungsschicht, die auf der Oberfläche eines aus einer Faser bestehenden Handschuhs bereitgestellt ist, **dadurch gekennzeichnet, dass**
eine Vielzahl von Poren mit einer Fläche von 0,785 bis 78,5 µm² vorhanden sind und
ein Mittelwert der geringsten Dicke jeder Harzschicht, die zwischen den Poren vorliegt, für die jeweiligen Poren 0,9 bis 178 µm beträgt
in einem elektronenmikroskopischen Feld, wenn ein zentraler Bereich eines rechteckigen Fingerpads, das 40 mm von einer Fingerspitze zu einerm Fingerpad hin entfernt ist, eines Fingerbereichs in der porösen Beschichtungsschicht herausgeschnitten wird und ein Querschnitt von 253 µm in der Länge ausgehend von der Fingerspitze zum Fingerpad hin und 2,5 bis 10 µm in der Tiefe senkrecht zu einer Oberfläche der porösen Beschichtungsschicht bei einer 500-fachen Vergrößerung mit einem Elektronenmikroskop betrachtet wird,
und dadurch, dass der Handschuh erhältlich ist durch
(a) Tauchen eines aus einer Faser bestehenden Handschuhs, der auf eine Handform gezogen wurde, in eine Polyurethanharz-Lösung und Hochziehen der Handform, um die überschüssige Lösung zu entfernen, und Tauchen der Handform in Wasser mit einer Wassertemperatur von 20 bis 70°C, das ein organisches Lösungsmittel mit einem Löslichkeitsparameter von 6,0 bis 10,5 in einer Menge von 0,01 bis 20 Gew.-% enthält, um ein Gelieren des Polyurethans in einem porösen Zustand zu bewirken, oder
(b) Tauchen eines aus einer Faser bestehenden Handschuhs, der über eine Handform gezogen wurde, in eine Polyurethanharz-Lösung, die ein organisches Lösungsmittel mit einem Löslichkeitsparameter von 6,0 bis 10,5 in einer Menge von 1 bis 200 Gewichtsteilen, bezogen auf 100 Gewichtsteile des Harzgehalts, enthält, Hochziehen der Handform, um die überschüssige Lösung zu entfernen, und Tauchen der Handform in Wasser mit einer Wassertemperatur von 20 bis 70°C, um ein Gelieren des Polyurethans in einem porösen Zustand zu bewirken.

2. Der Handschuh nach Anspruch 1, wobei ein Leerstellenanteil der Gesamtfläche an Poren mit einer Fläche von nicht weniger als 0,785 µm² zu einer Fläche des elektronenmikroskopischen Felds 0,3 bis 75% beträgt.

3. Der Handschuh nach Anspruch 1 oder 2, wobei eine Anzahl an Poren mit einer Fläche von 0,785 bis 78,5 µm² in dem elektronenmikroskopischen Feld 2 bis 35 beträgt.

4. Der Handschuh nach einem der Ansprüche 1 bis 3, wobei die Dicke der porösen Beschichtungsschicht 7,5 bis 150 µm beträgt.

5. Der Handschuh nach Anspruch 1, wobei das organische Lösungsmittel Methylethylketon oder Ethylbenzol ist.

## Revendications

1. Gant incluant une couche de revêtement poreuse comprenant une résine de polyuréthane à la surface d'un gant fait d'une fibre, **caractérisé en ce que**
une pluralité de pores ayant une surface de 0,785 à 78,5 µm² sont présents, et une moyenne de la plus petite épaisseur de chaque couche de résine existant entre les pores pour les pores respectifs est de 0,9 à 178 µm
dans un champ de microscopie électronique au moment où une partie centrale de coussinet tactile rectangulaire, éloignée à 40 mm d'un bout de doigt vers un coussinet tactile, d'une partie de doigt dans la couche de revêtement poreuse est découpée et une section transversale de 253 µm en longueur dirigée depuis le bout de doigt vers le coussinet tactile et de 2,5 à 10 µm en profondeur perpendiculairement depuis une surface de la couche de revêtement poreuse est observée à un grossissement de 500 fois avec un microscope électronique,
et **en ce que** le gant peut être obtenu en
(a) trempant un gant fait d'une fibre placé sur un moule à main, dans une solution de résine de polyuréthane, et en remontant le moule à main pour éliminer la solution en excès, et en trempant le moule à main dans de l'eau avec une température de l'eau de 20 à 70 °C contenant un solvant organique avec un paramètre de solubilité de 6,0 à 10,5 dans une quantité de 0,01 à 20 % en poids pour faire gélifier le polyuréthane dans un état poreux, ou
(b) trempant un gant fait d'une fibre placé sur un moule à main dans une solution de résine de polyuréthane contenant un solvant organique avec un paramètre de solubilité de 6,0 à 10,5 dans une quantité de 1 à 200 parties en poids sur la base de 100 parties en poids du contenu de résine, en remontant le moule à main pour éliminer la solution en excès, et en trempant le moule à main dans de l'eau avec une température de l'eau de 20 à 70 °C pour faire gélifier le polyuréthane dans un état poreux.

2. Gant selon la revendication 1, dans lequel un taux de vide de la surface totale de pores ayant une surface qui n'est pas inférieure à 0,785 µm² par rapport à une surface du champ de microscopie électronique est de 0,3 à 75 %.

3. Gant selon la revendication 1 ou 2, dans lequel un nombre de pores ayant une surface de 0,785 à 78,5 µm² dans le champ de microscopie électronique est de 2 à 35.

4. Gant selon l'une quelconque des revendications 1 à 3, dans lequel l'épaisseur de la couche de revêtement poreuse est de 7,5 à 150 µm.

5. Gant selon la revendication 1, dans lequel le solvant organique est une méthyleéthylecétone ou un éthylbenzène.
